# EUROPÄISCHE PATENTSCHRIFT

(11) **EP 3 569 387 B1**
(45) Veröffentlichungstag und Bekanntmachung des Hinweises auf die Patenterteilung: **28.02.2024**
(21) Anmeldenummer: 19000210.5
(22) Anmeldetag: 30.04.2019
(51) Int. Cl.: B29C 53/60, B29C 53/58

(54) **VERFAHREN ZUM AUFBRINGEN BZW. ERZEUGEN EINER FASERSCHICHT BEI DER HERSTELLUNG VON DOME UMFASSENDEN TANKSTRUKTUREN**
METHOD FOR APPLYING OR GENERATING A FIBROUS LAYER IN THE PRODUCTION OF DOME COMPRISING TANK STRUCTURES
PROCÉDÉ D'APPLICATION OU DE PRODUCTION D'UNE COUCHE FIBREUSE LORS DE LA FABRICATION DE STRUCTURES DE RÉSERVOIR COMPORTANT UN DÔME

(30) Priorität: 17.05.2018 DE 102018003996
(43) Veröffentlichungstag der Anmeldung: 20.11.2019
(73) Patentinhaber: MT Aerospace AG, 86153 Augsburg (DE)
(72) Erfinder: Klitni, Viktor, 86152 Augsburg (DE); Ortmann, Peter, 86150 Augsburg (DE); Scharringhausen, Joachim, 86161 Augsburg (DE)
(74) Vertreter: Grape & Schwarzensteiner

(56) Entgegenhaltungen:
- EP-A1- 3 267 091
- WO-A1-2011/009630

## Beschreibung

Die vorliegende Erfindung betrifft ein Verfahren zum Aufbringen bzw. Erzeugen einer Faserschicht bei der Herstellung von Dome umfassenden Tankstrukturen.

Bei der Herstellung von Druckbehältern bzw. Tanks mit Domen, die zum Beispiel die Kontur eines geodätischen Isotensoids, nach Cassini, einer Ellipse oder eine wie auch immer gestaltete Kontur aufweisen, müssen bei einer konstanten Anzahl von Faserbändern und damit einem gegebenen Gesamtquerschnitt vom Äquator bis zu der/den Polöffnung(en), diese Faserbänder auf einem immer kleiner werdenden Umfang untergebracht werden.

Das bedeutet, dass die Wanddicke zu der/den Polöffnung(en) hin stetig zunimmt. Das Ausmaß der Zunahme wird von der Geometrie, dem lokalen Radius bzw. Umfang, aber auch vom Wickelwinkel und von der gewählten Bandbreite der zum Einsatz kommenden Faserbänder bestimmt.

Diese Bandbreite ergibt sich aus dem Querschnitt eines gewählten Rovings und der Anzahl der gleichzeitig verarbeitbaren Rovings. Die Anzahl der gleichzeitig verarbeitbaren Rovings wird wiederum durch die zu deren Verarbeitung, d.h. Abspulung üblicherweise vorhandenen Anlagen bestimmt, da diese nur mit einer begrenzten Anzahl von Spulen ausgerüstet sind.

Damit bestimmt die Anzahl der in einer vorhandenen herkömmlichen Wickelanlage vorhandenen Spulen im Wesentlichen die erzielbare Bandbreite. Natürlich wird die Bandbreite auch durch andere Effekte, zum Beispiel durch eine Vorspannung, die an dem Roving bei dessen Abwicklung angelegt wird, bestimmt. Auch die Form des einzelnen Rovings kann bestimmend sein, beispielsweise wenn ein Roving durch einen Umwindungsfaden in eine gewisse Form gebracht wird. Solche Faktoren müssen zwar berücksichtigt werden, bedürfen aber keiner Modifikation der Wickelanlage.

Die insgesamt erforderliche Schichtdicke, der Faserquerschnitt in Dickenrichtung, ergibt sich zum einen aus der Geometrie der herzustellenden Tankstruktur und durch die zu erwartende auszuhaltende Belastung, beispielsweise den zu erwartenden auflastenden Innendruck. Diese Fasermenge, der Querschnitt in Dickenrichtung, ist in der Regel nicht in einer einzigen Lage/Schicht mit optimaler Bedeckung zu realisieren. Man wird die Fasermenge daher in mehreren Schichten/Lagen aufbringen, wobei man versucht, die optimale Bedeckung, d.h. 100% für jede dieser Lagen, zu erreichen.

Folgt man der Kontur einer Tankstruktur vom Äquator des Tanks zur Polöffnung eines Doms auf einem Meridian, so nehmen Wanddicke und Wickelwinkel der einzelnen Schichten/Lagen immer weiter zu, wobei die Wanddicke durch den örtlichen Radius der Kontur und durch den örtlichen Wickelwinkel beeinflusst wird. Der örtliche Wickelwinkel am Dom ergibt sich als Funktion des Polöffnungsradius zum Radius am Äquator (α(r) = arcsin (e/r). Theoretisch erreicht der Winkel an der Polöffnung den Wert von 90°, was ebenfalls theoretisch die Konsequenz hat, dass die Wanddicke der betrachteten Lage hier gegen unendlich geht.

Bei einem Band, das aus n Rovings besteht, wird sich daher an der Polöffnung eine festzustellende reale Wanddicke des sogenannten Wulstes ergeben, die abhängig von der Anzahl n der Rovings ist. Je mehr Rovings das Band bilden, d.h. je breiter das abzuwickelnde Band sein kann, desto geringer ist die Wanddicke, der Wulst, an der/den Polöffnung(en) ausführbar.

Im Gegensatz dazu kommt es bei einer geringen Bandbreite, wie sie mit herkömmlichen Spulenanlagen nur realisierbar ist, in der Nähe der Polöffnung(en) zu einem schnellen und unerwünschten Anstieg der lokalen Wanddicken, wie gesagt auch in Abhängigkeit vom Wickelwinkel.

Für großdimensionierte Behälter wäre es von Vorteil, die Kreuzlagen mit einem möglichst breiten, respektive breiteren Band zu wickeln, um den sich zwangsläufig ausbildenden Wulst an der/den Polöffnung(en) so dünn (gering) wie möglich zu halten. Das scheitert aber wie gesagt daran, dass bei den herkömmlichen zur Verfügung stehenden Anlagen nur eine begrenzte Anzahl zuführbarer Rovings enthalten ist, mit denen somit nur eine relativ geringe Bandbreite realisierbar ist.

Das Bereitstellen dahingehend verbesserter Anlagen, welche eine größere Anzahl von Roving-Spulen umfassen oder umfassen können, wäre aber mit einem erheblichen Kostenaufwand verbunden, auch weil solche erweiterten Anlagen wiederum nicht universell, d.h. für alle Behältergrößen einsetzbar wären.

Die WO 2011/009630 A1 beschreibt ein Verfahren zur Herstellung eines aufblasbaren Verschlusspfropfens für Rohre, bei welchem auf einer Vorform mit zwei Polen wenigstens ein wenig dehnbarer gewickelt wird. Der Strang kreuzt die Achse der Vorform. Die Wicklung wird ausgebreitet, damit eine Überlappung in den Polbereichen vermieden wird.

Die EP 3 267 091 A1 beschreibt Druckbehälter, umfassend einen Körper und eine auf dem Körper angeordnete auf Tapes basierende Verstärkungsstruktur, wobei die auf Tapes basierende Verstärkungsstruktur ein Primärband, das in umfänglicher Weise auf dem Körper angeordnet ist und ein Sekundärband, das in nicht-umfänglicher Weise auf dem Körper angeordnet ist, wobei wenigstens ein Abschnitt des Sekundärbandes an dem Primärbandes befestigt ist.

Aufgabe der vorliegenden Erfindung war es daher, eine Arbeitsweise zu entwickeln, mit welcher ohne zusätzlichen apparativen Aufwand eine im Vergleich zum Stand der Technik deutlich geringere Wanddicke im Polbereich der Dome ermöglicht werden kann.

Idee der vorliegenden Erfindung war es, durch ein modifiziertes Ablage- bzw. Wickelverfahren zum Aufbringen der Faserschicht(en) bzw. ein modifiziertes Wickelmuster ein breiteres Band zu simulieren.

Ausgehend davon ist Gegenstand der vorliegenden Erfindung ein Verfahren nach Anspruch 1.

Damit kann mit einer herkömmlichen Wickelanlage, die nur eine begrenzte Anzahl von zuführenden Spulen für die Rovings umfasst, ein X-fach breiteres Band quasi simuliert werden und es bilden sich im Bereich der Polöffnung(en) signifikant geringere Aufdickungen der Faserschicht, welche unerwünscht und nachteilig sind.

Die Art der Faserablage kann theoretisch mehr oder weniger händisch, d.h. halbautomatisch durchgeführt werden, ist aber vorzugsweise vollautomatisiert und beruht auf einem Algorithmus, d.h. einem Programm/einer Software, mit welchem die Wickelbahnen berechnet und bestimmt werden.

Für beide Fälle wird dazu gemäß Anspruch 1 erfindungsgemäß in Abhängigkeit der Dimensionierung und Kontur der Dombereiche der herzustellenden Tankstruktur eine geodätische Spur der Bandbreite XB, also einer gewünschten X-fachen Bandbreite B, letztere bestehend aus n möglichen Rovings, berechnet und die so berechnete geodätische Spur in X Wickelpfade unterteilt, welche manuell/halbautomatisch oder automatisch abzuarbeiten sind. Der geodätische Pfad ist somit abhängig von der Domkontur (dem Kern und der letzten gewickelten Lage), der gewünschten Polöffnung (Form und Größe), dem Zylinderdurchmesser und der Breite des zu wickelnden Bandes.

Die Bandbreite B ist somit die Bandbreite, die mit einer herkömmlichen Wickelanlage mit einer vorgegebenen Anzahl an Rovings zu verwirklichen ist. Dabei ist zu berücksichtigen, dass über die gesamte X-fache Bandbreite ausreichend Reibung an der an der Oberflächenkontur des Wickelkerns vorhanden ist und die Bänder in der vorgesehenen Position über dem Verlauf der Abwicklung liegen bleiben können und nicht verrutschen. Die X-fache Bandbreite ist damit je nach Dimensionierung des Tanks nicht einfach durch ein nebeneinander Ablegen der Bänder realisierbar.

Erfindungsgemäß wird gemäß Anspruch 1 also aus der Anzahl X von Wickelpfaden ein mittlerer Pfad als Masterspur bestimmt, welche um einen Abstand (XB-B)/2 zu den Polöffnungen von einem Polende zum anderen abgewickelt wird.

Vorzugsweise werden die (XB-B) Pfade jeweils seitlich von dem mittleren Pfad und von einer Polöffnung zur gegenüberliegenden abgewickelt.

Dazu ist es des Weiteren vorteilhaft, die jeweils seitlichen Pfade von einer Polöffnung zur anderen um den Betrag B + XB versetzt verlaufen zu lassen.

Unter diesem Aspekt ist es des Weiteren vorteilhaft, das Versetzen der Wickelpfade durch Manipulieren der Drehbewegung des Wickelkerns und/oder der Lateralbewegung eines Fadenauges, mit welchem die n Rovings über der Wickelkern geführt werden, vorzunehmen. Auf diese Weise wird ermöglicht, dass keine Änderung des Wickelwinkels (bezüglich der Achse des Wickelkerns) im zylindrischen Teil der Tankstruktur erfolgt.

Obwohl die Zahl X zumindest Werte zwischen 2 und 7 einnehmen könnte, lässt sich eine einfache und bevorzugte Variante des erfindungsgemäßen Verfahrens mit einem Wert X = 3 bei einer Bandbreite B aus n Rovings verwirklichen. Daraus resultiert dann eine Gesamt-Bandbreite von 3B, welche für die meisten großdimensionierten Tankstrukturen geeignet ist, bei gleichzeitiger reibschlüssiger Anhaftung der Bänder an dem Wickelkern/Liner.

Die den Roving bildenden Fasern werden hinsichtlich ihrer Verstärkungs- und Stabilitätseigenschaften wie üblich aus Glas-, Aramid- oder Kohlefasern oder auch Mischungen daraus ausgewählt.

Im Rahmen der vorliegenden Erfindung können mit Harz vorgetränkte oder nicht-vorgetränkte Rovings verwendet werden. Die Rovings können je nach den jeweiligen Anforderungen während des Wickelns vorgespannt werden. Zur Herstellung dickwandiger Tankstrukturen können zur Erhöhung der Tränkbarkeit modifizierte Rovings verwendet werden, beispielsweise solche, die zusätzlich mit einem Faden umwickelt sind.

Das Harz kann aus der Gruppe der Duroplaste oder Thermoplaste ausgewählt werden. Duroplaste sind beispielsweise Epoxide, vernetzbare PU's oder ungesättigte Polyesterharze. Thermoplaste sind ABS, PA, PLA, PMMA, PC, PBT, PE, PP, PS, PEEK.

In vorteilhafter Weise werden die Rovings während des Wickelns vorgespannt und/oder es kommen mit einem Faden umwickelte Rovings zum Einsatz.

Die erfinderische Idee wird also im Wesentlichen wie folgt umgesetzt:
Es wird eine geodätische Spur einer Bandbreite XB, zur Ermittlung einer mittleren Masterspur berechnet. Dann erfolgt eine X-fache Verschiebung dieser Masterspur um die tatsächliche Bandbreite B, wobei das Verschieben der Spuren in den Domen stattfindet. Dabei muss auf die richtige Reihenfolge des Verschiebens und des Wickelns der einzelnen Spuren geachtet werden, so dass ein repräsentatives Wickelmuster entsteht, das einer Wickellage mit X-facher Bandbreite der Rovinganzahl n entspricht.

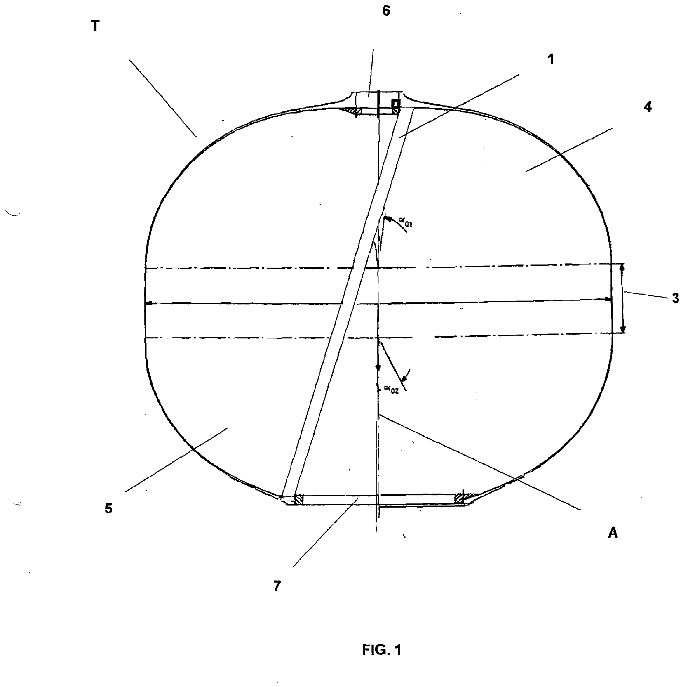

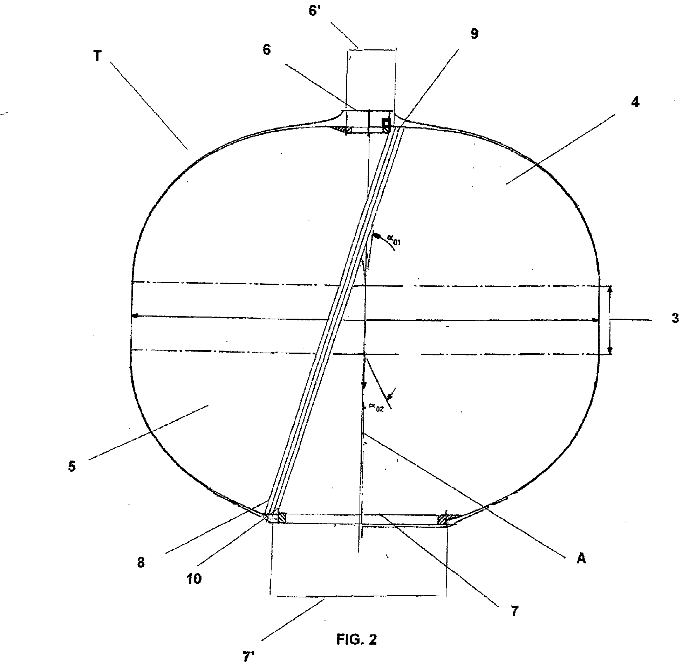

Die Erfindung wird nun anhand der beigefügten Zeichnungen, den Figuren 1 und 2, und an einem konkreten Ausführungsbeispiel für X = 3 näher erläutert.
- Fig. 1: zeigt schematisch ein einziges breites Band, mit einer X-fachen Bandbreite.
- Fig. 2: zeigt das Prinzip der vorliegenden Erfindung, mit einer X-fachen Bandbreite XB, unterteilt in drei Pfade.

In der Figur 1 ist eine Tankstruktur T bzw. ein dieser Tankstruktur T zugrunde liegender Wickelkern 2 gezeigt, mit einem zylindrischen Abschnitt 3, daran angrenzenden Dombereichen 4 und 5 und an den Scheitelpunkten der Dome vorgesehenen Polöffnungen 6 und 7 gezeigt.

In Figur 1 ist schematisch auch die Wicklung eines breiten Bandes 1 von zum Beispiel 60 mm Breite dargestellt, welche von einer Polöffnung 6 zu einer gegenüber liegenden Polöffnung 7 versetzt verläuft. Der Wickelkern 2 hat wie üblich eine endformnahe Dimensionierung. Der Wickelkern 2 kann mit einem Liner vorbelegt sein oder nicht. Der Liner kann aus Metall, einer Metalllegierung und oder Kunststoff sowie gegebenenfalls Kombinationen daraus bestehen.

Das Faserband 1, bestehend aus n Rovings, ist derart von Polöffnung 6 zu Polöffnung 7 geführt, dass eine diametrale Versetzung des Faserbandes 1 bezüglich der Achse A des Wickelkerns stattfindet.

Zur Ablage von derart breiten Bändern sind Wickeltools mit einer vielfachen Zahl von Spulen, aus denen die Rovings zugeführt werden können, erforderlich. Das ließe sich nur durch einen hohen apparativen Aufwand realisieren.

In Figur 2 ist die Erfindung am Beispiel einer simulierten Bandbreite von 60 mm gezeigt, wobei die Gesamtbandbreite von 60 mm ausgehend von 3 Bändern (bestehend aus n Rovings) 8, 9 und 10 einer Bandbreite von jeweils 20 mm mit einer herkömmlichen Apparatur zur Zuführung von n Rovings mit einer Bandbreite von 20 mm realisierbar ist.

Mit Hilfe eines vorhandenen Programms wird die mittlere Spur, respektive das mittlere Band, respektive der mittlere Pfad so berechnet, dass das Band an beiden Polöffnungen 6 und 7 eine fiktive Polöffnung 6' und 7'bildet, die im Vergleich den realen Polöffnungen 6 und 7 um die Bandbreite B größer ist. Das entspricht der mittleren Spur, dem mittleren Pfad 9. Zu dieser mittleren Spur 9 wird durch geometrische Berechnungen eine jeweils neue Spur 8 und 10, eine links und eine rechts zur mittleren Spur 9, bestimmt.

Um ein Wickelmuster, repräsentativ für eine 3-fache Bandbreite (60 mm) umzusetzen, wurde folgendes Vorgehen entwickelt:
1. Generierung/Programmierung eines Wickelmusters/einer Kreuzlage mit einer Bandbreite von 60 mm.
2. Der so programmierte Pfad, wie er in Figur 1 dargestellt ist, wird nun in 3 Unterprogramme (Unterpfade) 8, 9 und 10, d.h. drei aneinandergrenzende Pfade 8, 9 und 10 mit folgender Spezifizierung unterteilt:
   o Ein erster Pfad 8 mit einer Bandbreite von 20 mm kommt im Vergleich zu Pfad 9 mit einer verkleinerten/vergrößerten fiktiven Polöffnung 6, 7' von 20 mm zu liegen.
   o Der zweite Pfad 9 mit einer Bandbreite von ebenfalls 20 mm entspricht der Mittelspur des Masterpfades (siehe oben).
   ∘ Der dritte Pfad 10, ebenfalls einer Bandbreite von 20 mm, kommt im Vergleich zu Pfad 9 mit einer vergrößerten/verkleinerten fiktiven Polöffnung 6', 7' von 20 mm zu liegen.
   ∘ Für die Pfade 8 und 10 gilt damit, dass die fiktiven Polöffnungen 6' und 7' auf einer Seite des Wickelkerns 2 verkleinert und auf der anderen Seite des Wickelkerns 2 vergrößert werden.
      Auf welcher Seite die Bänder 9, respektive 10 zuerst bezüglich der Achse A des Tanks verschoben bzw. versetzt werden, wird vom Wickelmuster und der Art der Unterteilung bestimmt. Wird z.B. für den Pfad 9 die eine fiktive Polöffnung 6' vergrößert, so muss die andere gegenüberliegende fiktive Polöffnung 7' verkleinert werden.
      Für Pfad 10 gilt dann das Umgekehrte. Mit anderen Worten, das Wickelmuster bzw. die Unterteilung bestimmt die Reihenfolge der einzelnen Spuren. Wenn beispielsweise die Kreuzlage eine 7-er Teilung hat, wird zuerst eine erste Spur 1 siebenmal gewickelt, dann wird eine zweite Spur siebenmal gewickelt, dann siebenmal eine dritte Spur. Dieser Vorgang wird (mehrfach) wiederholt. Dies bedeutet, der Pfad wird erst versetzt, wenn das Band im Zylinder das erste Mal neben einem schon gewickelten Band gewickelt wird (Teilung). Eine 7-er Teilung bedeutet, dass 7 Umläufe gewickelt werden und erst beim achten Umlauf das Band neben dem ersten gewickelten Band im Zylinder liegt.
      Am Schluss müssen alle Pfade 8, 9 und 10, respektive die Bänder einer Bandbreite von 20 mm, jeweils bestehend aus n Rovings, im Dombereich bzw. um die Polöffnungen 6, 7 herum jeweils nebeneinander liegen, ohne sich zu überkreuzen.
   ∘ Die unterschiedlichen fiktiven Polöffnungen 6', 7', respektive das unterschiedliche Versetzen der Bänder wird durch eine Manipulation der Drehung des Wickelkerns und/oder der Lateralbewegung des Fadenauges zueinander über dem Wickelkern während des Wickelns im Dombereich realisiert. Der Pfad/Faserverlauf im Zylinderbereich wird dagegen nicht verändert.
3. Abschließend werden die 3 generierten/programmierten Pfade 8, 9 und 10 wieder zu einem Hauptprogramm zusammengesetzt. Dabei ist zu berücksichtigen, dass die Pfade in der richtigen Reihenfolge und Anzahl abgefahren werden, so dass am Schluss eine geschlossene Lage ohne Überkreuzen der Bänder entsteht. Die Reihenfolge ist hierbei abhängig vom Wickelmuster, d.h. der Teilung und der Anzahl der Umläufe.

Mit der erfindungsgemäßen Generierung, respektive Programmierung wird somit eine X-fache Bandbreite der zur Verfügung stehenden Rovings simuliert/programmiert. Das bedeutet, dass bei einer zur Verfügung stehenden Rovingzahl n und einer daraus resultierenden Bandbreite B, eine Kreuzlage simuliert/programmiert wird, die einer Kreuzlage mit einer Bandbreite XB entspricht.

Hervor zu heben ist dabei vor allem die repräsentative Wulstgestaltung (signifikant geringere Aufdickung) und das Wickelmuster (Versetzung der Wickelspur im Dombereich). Das Verfahren lässt sich mit allen herkömmlichen Wickelvorrichtungen mit einer begrenzten Anzahl vorhandener Rovingspulen ohne zusätzlichen apparativen Aufwand durchführen. Es ist damit zur Herstellung von Tankstrukturen verschiedenster Dimensionierung geeignet.

## Patentansprüche

1. Verfahren zum Aufbringen einer Faserschicht bei der Herstellung von Dome umfassenden Tankstrukturen (T), durch Bewickeln eines Wickelkerns (2) mit Faserbändern (8,9,10) einer Bandbreite B, jeweils bestehend aus n Rovings, wobei in Abhängigkeit der Dimensionierung der Dome (4,5) der herzustellenden Tankstruktur (T) eine geodätische Spur der Bandbreite XB berechnet und die so berechnete geodätische Spur in X Wickelpfade unterteilt wird, indem aus der Anzahl X von Wickelpfaden ein mittlerer Pfad (9) als Masterspur bestimmt wird, welcher um einen Abstand (XB-B)/2 zu den Polöffnungen (6,7) von einer Polöffnung (6,7) zur anderen abgewickelt wird, sodass im Bereich der Dome (4,5) das Wickelmuster derart modifiziert wird, dass eine X-fache Bandbreite XB erhalten wird.

2. Verfahren nach Anspruch 1, **dadurch gekennzeichnet, dass** X-B Pfade (8,10) jeweils seitlich von dem mittleren Pfad (9) von einer Polöffnung (6,7) zur anderen abgewickelt wird.

3. Verfahren nach Anspruch 2, **dadurch gekennzeichnet, dass** die Pfade (8,10) von einer Polöffnung (6,7) zur anderen um den Betrag B + X versetzt verlaufen.

4. Verfahren nach Anspruch 3, **dadurch gekennzeichnet, dass** das Versetzen der Pfade (8,10) durch Manipulieren der Drehbewegung des Wickelkerns (2) und/oder der Lateralbewegung eines Fadenauges, durch welches die n Rovings geführt werden, vorgenommen wird.

5. Verfahren nach wenigstens einem der Ansprüche 1 bis 4, **dadurch gekennzeichnet, dass** X = 3 ist.

6. Verfahren nach wenigstens einem der Ansprüche 1 bis 4, **dadurch gekennzeichnet, dass** die den Roving bildenden Fasern aus Glas-, Aramid- oder Kohlefasern oder Mischungen daraus ausgewählt werden.

7. Verfahren nach einem jeden der vorhergehenden Ansprüche 1 bis 6, **dadurch gekennzeichnet, dass** mit Harz vorgetränkte oder nicht mit Harz vorgetränkte Rovings verwendet werden.

8. Verfahren nach Anspruch 7, **dadurch gekennzeichnet, dass** das Harz aus der Gruppe der Duroplaste ausgewählt wird.

9. Verfahren nach einem jeden der vorhergehenden Ansprüche, **dadurch gekennzeichnet, dass** die Rovings während des Wickelns vorgespannt werden.

10. Verfahren nach einem jeden der vorhergehenden Ansprüche, **dadurch gekennzeichnet, dass** mit einem Faden umwickelte Rovings eingesetzt werden.

## Claims

1. Method for applying a fiber layer in the manufacture of tank structures (T) comprising domes by winding a winding core (2) with fiber strips (8, 9, 10) of a strip width B, each consisting of n rovings, whereby, depending on the dimensioning of the domes (4, 5) of the tank structure (T) to be produced, a geodesic track of the strip width XB is calculated and the geodesic track calculated in this way is subdivided in X winding paths by determining a middle path (9) from the number X of winding paths as master track which is unwound from one pole opening (6, 7) to the other by a distance (XB-B)/2 to the pole openings (6, 7), thus modifying the winding pattern in the area of the domes (4, 5) in such a way that an X-fold strip width XB is achieved.

2. Method according to claim 1, **characterized in that** X-B paths (8, 10) are each unwound laterally from the middle path (9) from one pole opening (6, 7) to the other.

3. Method according to claim 2, **characterized in that** the paths (8, 10) run offset from one pole opening (6, 7) to the other by the amount B + X.

4. Method according to claim 3, **characterized in that** the displacement of the paths (8, 10) takes place by manipulating the rotary motion of the winding core (2) and/or the lateral motion of a yarn eye through which the n rovings are guided.

5. Method according to at least one of claims 1 to 4, **characterized in that** X is 3.

6. Method according to at least one of claims 1 to 4, **characterized in that** the fibers forming the roving are selected from glass fibers, aramid fibers or carbon fibers, or mixtures thereof.

7. Method according to anyone of the preceding claims 1 to 6, **characterized in that** rovings pre-impregnated with resin or not pre-impregnated with resin are used.

8. Method according to claim 7, **characterized in that** the resin is selected from the group of thermosets.

9. Method according to anyone of the preceding claims, **characterized in that** the rovings are pre-tensioned during winding.

10. Method according to anyone of the preceding claims, **characterized in that** thread-wrapped rovings are used.

## Revendications

1. Procédé destiné à appliquer une couche de fibres lors de la fabrication de structures de réservoir (T) comprenant des dômes en enroulant un noyau d'enroulement (2) de bandes de fibres (8, 9, 10) d'une largeur de bande B, constituées respectivement de n mèches, dans lequel une piste géodésique de la largeur de bande XB est calculée en fonction du dimensionnement des dômes (4, 5) de la structure de réservoir (T) à fabriquer et la piste géodésique ainsi calculée est divisée en X chemins d'enroulement en ce qu'un chemin moyen (9) est déterminé en tant que piste maître à partir du nombre X de chemins d'enroulement, lequel est déroulé d'une ouverture de pôle (6, 7) à l'autre à une distance (XB-B)/2 par rapport aux ouvertures de pôle (6, 7) si bien que le motif d'enroulement est modifié dans la zone des dômes (4, 5) de telle manière qu'un multiple X de la largeur de bande XB est obtenu.

2. Procédé selon la revendication 1, **caractérisé en ce que** X-B chemins (8, 10) sont déroulés respectivement latéralement du chemin central (9) d'une ouverture de pôle (6, 7) à l'autre.

3. Procédé selon la revendication 2, **caractérisé en ce que** les chemins (8, 10) s'étendent d'une ouverture de pôle (6, 7) à l'autre de manière décalée de la valeur B + X.

4. Procédé selon la revendication 3, **caractérisé en ce que** le décalage des chemins (8, 10) est réalisé par manipulation du déplacement par rotation du noyau d'enroulement (2) et/ou du déplacement latéral d'un œillet de lisse, par lequel les n mèches sont guidées.

5. Procédé selon au moins l'une quelconque des revendications 1 à 4, **caractérisé en ce que** X = 3.

6. Procédé selon au moins l'une quelconque des revendications 1 à 4, **caractérisé en ce que** les fibres formant la mèche sont sélectionnées parmi des fibres de verre, d'aramide ou de charbon ou des mélanges de celles-ci.

7. Procédé selon chacune des revendications précédentes 1 à 6, **caractérisé en ce que** sont utilisés des mèches préimprégnées de résine ou non préimprégnées de résine.

8. Procédé selon la revendication 7, **caractérisé en ce que** la résine est choisie parmi le groupe des thermodurcissables.

9. Procédé selon chacune des revendications précédentes, **caractérisé en ce que** les mèches sont précontraintes pendant l'enroulement.

10. Procédé selon chacune des revendications précédentes, **caractérisé en ce que** sont employées des mèches entourées d'un fil.
